# EUROPÄISCHE PATENTSCHRIFT

(11) **EP 3 455 618 B1**
(45) Veröffentlichungstag und Bekanntmachung des Hinweises auf die Patenterteilung: **30.12.2020**
(21) Anmeldenummer: 17722792.3
(22) Anmeldetag: 11.05.2017
(51) Int. Cl.: G01N 27/72, G01N 29/04, G01N 29/22, G01N 29/32

(54) **VORRICHTUNG MIT SCHUTZVORRICHTUNG ZUR UNTERSUCHUNG EINER ROHRWAND ODER EINES SONSTIGEN WERKSTÜCKS**
DEVICE HAVING A PROTECTIVE DEVICE FOR EXAMINING A PIPE WALL OR OTHER WORKPIECE
DISPOSITIF COMPRENANT UN DISPOSITIF DE PROTECTION SERVANT AU CONTRÔLE D'UNE PAROI TUBULAIRE OU D'UNE AUTRE PIÈCE

(30) Priorität: 11.05.2016 DE 102016108744
(43) Veröffentlichungstag der Anmeldung: 20.03.2019
(73) Patentinhaber: NDT Global Corporate Ltd. Ireland, Dublin 9 (IE)
(72) Erfinder: HENNIG, Thomas, Santry Demense Dublin 9 (IE)
(74) Vertreter: CMS Cameron McKenna Nabarro Olswang LLP
(86) Internationale Anmeldenummer: PCT/EP2017/061309
(87) Internationale Veröffentlichungsnummer: WO 2017/194667

(56) Entgegenhaltungen:
- WO-A1-80/02074
- WO-A1-95/06245
- DE-A1- 19 909 528
- DE-A1-102008 054 250
- US-A1- 2015 309 007

## Beschreibung

### Technisches Gebiet

Die vorliegende Erfindung betrifft eine Vorrichtung zur Untersuchung einer Rohrwand oder eines sonstigen Werkstücks, insbesondere für eine bei der Rohrleitungsprüfung zum Einsatz kommende Inspektionsvorrichtung, welche auch als Molch bezeichnet wird.

### Hintergrund

Rohrleitungen dienen in vielen Bereichen zum Transport von Fluiden. Zur Gewährleistung eines möglichst verlustarmen und sicheren Transports des Fluids ist es neben einer Endprüfung der Rohrleitung nach ihrer Montage unabdingbar, die Rohrleitung in gewissen zeitlichen Abständen oder nach Feststellen einer Leckage auf Fehlstellen zu untersuchen.

Zu diesem Zweck kann die zu untersuchende Rohrleitung beispielsweise mittels Ultraschall, Wirbelstrom oder Magnetstreufluss zerstörungsfrei und in-situ während des Betriebs geprüft werden. Bei einer solchen Prüfung wird etwa eine Anordnung aus Ultraschall-Sendeempfängern auf einem sogenannten Molch montiert und der Molch in die Leitung eingesetzt. Der Molch fährt dann durch die Rohrleitung, bestrahlt die Rohrinnenwand mit Ultraschall und nimmt die empfangenen Signale als Funktion der zurückgelegten Wegstrecke auf. Nach Beendigung oder sogar bereits während der Untersuchung können die empfangenen Signale ausgelesen und analysiert werden.

Ein solcher Molch kann eigenständig und/oder passiv durch ein die zu inspizierende Rohrleitung durchströmendes Fluid angetrieben werden. Als Fluide kommen sowohl Flüssigkeiten (u.a. Öl, Wasser) als auch Gase (u.a. Erdgas) in Betracht.

Nachteilig bei bekannten Molchen und Prüfanordnungen ist, dass die Sendeempfänger beim Einsatz in der von Fluid durchströmten Rohrleitung harschen Bedingungen in Form von diversen physischen und / oder chemischen Einwirkungen ausgesetzt sein können und somit einem Verschleiß unterliegen. Hiermit zusammenhängend kann es zu einer Verschmutzung im Bereich der Sendeempfänger kommen, die im Betrieb nur bedingt oder gar nicht entfernt werden kann und die Meßergebnisse beeinträchtigt.

Die DE 199 09 528 A1 offenbart eine Vorrichtung zur zerstörungsfreien Werkstoffprüfung eines Bauteils, die sowohl einen Ultraschallwandler als auch eine Wirbelstromsonde umfasst. Es sind auch Verfahren zur zerstörungsfreien Werkstoffprüfung eines Bauteils beschrieben, bei denen sowohl Ultraschall in das Bauteil eingekoppelt als auch Wirbelstrom im Bauteil erzeugt wird. In einem Ausführungsbeispiel weist die Vorrichtung eine Schutzschicht auf einer unteren Seite auf, um eine Folie, die eine Sondenspulenanordnung aufweist, vor Abrieb und Schmutz zu schützen.

Die WO 95/06245 A1 offenbart eine außermittige drehende Sonde zur Überprüfung von Rohren. Sie weist unter anderem ein Gehäuse auf einer Welle auf, das Öffnungen für Prüfköpfe auf seiner Seite hat. Die Öffnungen sind zu einer Rohrwand ausgerichtet. Um die Prüfköpfe in den Öffnungen zu befestigen, werden diese vorzugsweise mit Epoxid befüllt.

Die DE 10 2008 054250 A1 beschreibt einen elektromagnetisch-akustischen Messwandler zur Ultraschallprüfung von im Wesentlichen aus elektrisch leitfähigem Material bestehenden Prüflingen. Der Messwandler weist ein Magnetsystem zur Erzeugung eines zum Eindringen in den Prüfling vorgesehenen Magnetfeldes sowie eine Sondeneinheit mit einer induktiven Spulenanordnung auf. Die Sondeneinheit ist auf einem Faltenbalg angebracht, welcher ihr Bewegungsfreiheit in Bezug auf das Magnetsystem gewährt. Außerdem besitzt sie eine dünne Schutzplatte, die aus einem elektrisch nichtleitenden oder schlecht leitenden Material mit hoher mechanischer Verschleißfestigkeit besteht, zum Schutz der Spulen in der Sondeneinheit.

Die US 2015/309007 A1 offenbart eine Vorrichtung zur zerstörungsfreien Prüfung von Beton. Sie weist in einem Ausführungsbeispiel ein formbares solides Kopplungsmaterial auf, das Lücken zwischen einen Prüfkopf und Prüfmaterial auffüllt, um die akustische Kopplung zu verbessern.

Die WO 80/02074 A1 offenbart eine reifenförmige Sonde, um Defekte in einem mit der Sonde durchlaufenen Werkstück ohne zwischen eine Reifeoberfläche und das Werkstück aufgetragenes Kopplungsmittel aufzuspüren. Die Sonde weist einen mit Öl gefüllten Reifen auf, in dem ein Sendeempfänger montiert ist. Wenn der Reifen gegen das Testmaterial gedrückt wird, breitet er sich in Richtung seiner Drehachse aus, um die innere Fläche des Reifens mit dem Sendeempfänger zur akustischen Kopplung in Kontakt zu bringen. Der Letztere wird dabei gegen die innere Fläche des Reifens gedrückt. Der Reifen bildet eine Membran, die zwischen dem Sendeempfänger und dem Testmaterial liegt.

### Abriss der Erfindung

Die Erfindung wird durch die Vorrichtung gemäß Anspruch 1 definiert. Die abhängigen Ansprüche beschreiben bevorzugte Ausführungen der Erfindung.

### Kurze Beschreibung der Figuren

Nachfolgend werden beispielhafte Ausführungsformen anhand der folgenden Figuren beschrieben:
Figur 1 zeigt ein erstes Beispiel einer Vorrichtung;
Figur 2 zeigt ein weiteres Beispiel einer Vorrichtung;
Figur 3 zeigt eine Ausführungsform gemäß der Erfindung.
Figur 4 zeigt ein weiteres Beispiel einer Vorrichtung;
Figur 5 zeigt ein weiteres Beispiel einer Vorrichtung.

### Detaillierte Beschreibung

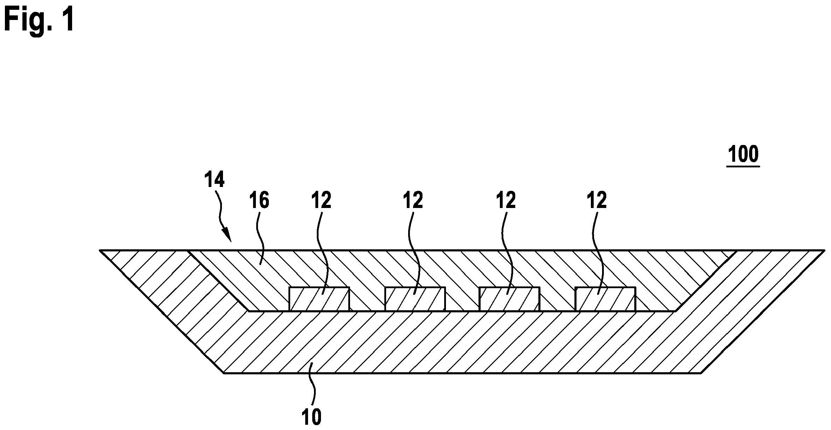

Figur 1 zeigt eine Schnittansicht einer nicht erfindungsgemäßen Vorrichtung 100 mit einen Träger 10 auf dem vier (Ultraschall-) Sendeempfänger 12 angeordnet sind. Der Träger 10 weist eine im Schnitt wannenartige Gestalt auf, wobei die Sendeempfänger 12 auf dem Boden der Wanne und somit in einer von der Wanne gebildeten Vertiefung 14 befestigt sind.

Auf dem Träger 10 ist ferner eine Schutzvorrichtung 16 angeordnet. Die Schutzvorrichtung 16 bedeckt dabei die Sendeempfänger 12 und schützt sie vor externen Einwirkungen.

Der Träger 10 kommt üblicherweise in einer Prüfvorrichtung für Werkstücke zum Einsatz, etwa einem Molch zur Prüfung von Rohrwänden auf Fehlstellen, Risse oder sonstige Defekte. Dabei wird der Träger 10 möglichst nahe an die und idealerweise in Kontakt mit der Rohrwand gebracht, sodass die Sendeempfänger 12 (Ultraschall-) Signale in Richtung Rohrwand aussenden und eine Signalantwort empfangen können.

Durch Bewegen des Trägers 10 entlang der Rohrwand (innen oder außen) kann man eine Prüfung des Rohres (oder sonstigen Werkstücks) vornehmen. Die Schutzvorrichtung 16 schützt dabei, wie vorstehend bereits erwähnt und aus der Figur 1 ersichtlich, die Sendeempfänger 12 vor physischen und chemischen Einwirkungen ebenso wie vor einer Verschmutzung durch etwaige Ablagerungen oder anderweitigen Schmutz, der sich ohne Schutzvorrichtung 16 auf oder zwischen den Sendeempfängern 12 sammeln könnte.

Die Sendeempfänger 12 können alle den gleichen Aufbau haben und sowohl als Sender als auch als Empfänger betrieben werden. Alternativ können manche nur als Sender und andere nur als Empfänger ausgebildet sein und / oder betrieben werden. Das Ansteuern und Auslesen der Sendeempfänger 12 erfolgt über eine entsprechende Logikschaltung und Leitungen (nicht gezeigt).

Die Schutzvorrichtung 16 besteht beispielsweise aus einem harten oder zähelastischen Material, welches einen relativ geringen Abrieb bei direktem Kontakt mit der Rohrwand (oder anderen Prüfstücken) aufweist und die Übertragung der (Ultraschall-)Signale von / zu den Sendeempfängern 12 ermöglicht. Das Material sollte ferner unempfindlich gegenüber dem in dem Rohr zu transportierenden Fluid sein.

Die Schutzvorrichtung 16 kann beispielsweise dadurch auf dem Träger 10 angeordnet werden, dass sie unter Verwendung geeigneter Materialien und Verfahren hineingegossen oder aufgespritzt wird.

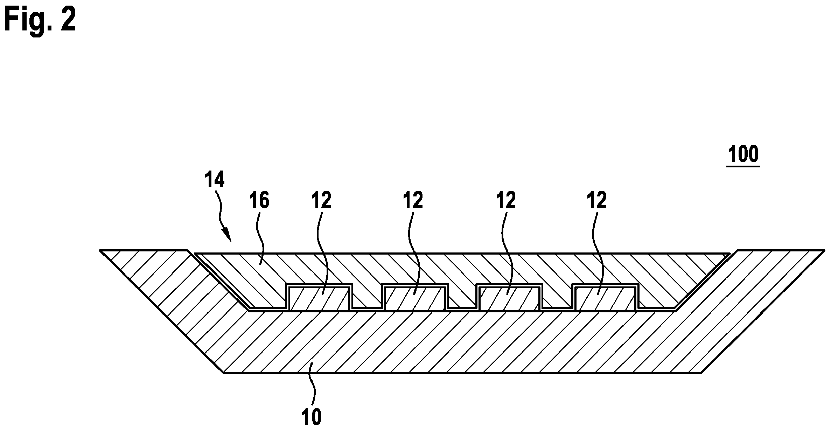

Eine weitere nicht erfindungsgemäße Ausführungsform ist in Figur 2 gezeigt. Dabei ist die Schutzvorrichtung 16 in Form einer aufsteckbaren, mithin lösbar befestigbaren Abdeckung ausgebildet. Diese Ausgestaltung der Schutzvorrichtung 16 ermöglicht ein leichtes Austauschen der Schutzvorrichtung 16. Der kleine Spalt zwischen der Schutzvorrichtung 16 und den Sendeempfängern 12 in der Figur 2 soll andeuten, dass die Schutzvorrichtung 16 nicht dauerhaft bzw. fest mit dem Träger 10 verbunden ist, sondern lediglich auf den Träger 10 aufgesetzt ist und beispielsweise durch eine Presspassung an dem Träger 10 gehalten wird.

Beispielhaft ist in der Figur 2 ferner zu erkennen, dass die nach außen weisende Seite bzw. in der Schnittzeichnung gemäß Figur 2 die Oberkante der Schutzvorrichtung 16 nicht mit den Schenkeln des Trägers 10 bündig abschließen muss. Je nach Materialwahl für die Schutzvorrichtung 16 bzw., genauer gesagt, je nach Kombination aus Material der Schutzvorrichtung 16, Material des Trägers 10 und Material des zu prüfenden Werkstücks, kann es in den beiden Ausführungsformen gemäß Figur 1 und Figur 2 vorteilhaft sein, die nach außen weisende Seite der Schutzvorrichtung 16 (etwas) zurück zu versetzen.

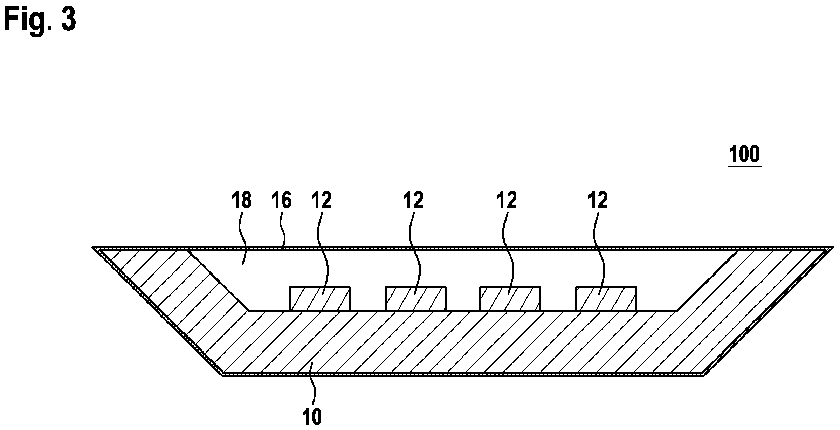

In Figur 3 ist eine erfindungsgemäße Ausführungsform gezeigt. Der Träger 10 ist dabei von einer Schutzvorrichtung 16 in Form einer Membran umgeben.

Die Sendeempfänger 12 sind, wie in den zuvor beschriebenen Ausführungsformen in der Vertiefung 14 des Trägers 10 angeordnet. Die Membran umspannt, wie dargestellt, den gesamten Träger 10. Somit ist die Membran insbesondere über der Vertiefung 14 angeordnet. Die Membran bedeckt die Vertiefung 14 dabei und bildet ein abgeschlossenes Volumen zwischen sich und dem Boden der Vertiefung 14 in dem Träger 10.

Hierdurch ist es möglich, die Vertiefung 14 mit einem Medium 18 wie Wasser zu füllen und dieses Medium 18 in der Vertiefung 14 einzuschließen, sodass das Medium 18 bei der Verwendung von Ultraschall als Kopplungsmedium dienen kann. Bevorzugt wird das Medium 18 dabei blasenfrei eingeschlossen. Ferner schützt die Membran die Sendeempfänger 12 vor Schmutz und vermindert Reibungsverluste bzw. etwaige schädliche Einwirkungen auf die Sendeempfänger.

Die Membran kann derart an dem Träger 10 angeordnet sein, dass sie bei einer Bewegung des Trägers 10 entlang der Rohrwand oder dem sonstigen Werkstück und einem gleichzeitigen Kontakt der Membran mit der Rohrwand oder dem sonstigen Werkstück abrollt. Hierzu können etwa an geeigneten Stellen des Trägers 10 Auf- und Abrollvorrichtungen oder Umlenkvorrichtungen angeordnet sein (nicht gezeigt). Diese können aktiv (also angetrieben) abrollend oder passiv abrollend sein. Ferner kann in allen Ausführungsformen die Vorrichtung 100 eine Einheit oder ein Mittel zum Aufbringen von Flüssigkeit auf zumindest einem Teil der Schutzvorrichtung 16 umfassen, insbesondere in der Ausführungsform gemäß Figur 3, worin die Schutzvorrichtung 16 in Form einer Membran ausgebildet ist. Das Mittel zum Aufbringen von Flüssigkeit kann dabei mit Hilfe einer oder mehrerer Düsen oder sonstiger Abgabevorrichtungen ausgebildet sein, welche Flüssigkeit aus einem Flüssigkeitsreservoir entnehmen (nicht gezeigt).

Durch das Aufbringen der Flüssigkeit kann sich ein Flüssigkeitsfilm auf der Schutzvorrichtung 16, insbesondere der Membran bilden, wodurch Reibungsverluste beim Bewegen der Vorrichtung 100 relativ zur Rohrwand / zum Werkstück (weiter) verringert werden. Dies ist insbesondere in Rohrleitungen, durch die Gase (jedoch keine Flüssigkeiten) geleitet werden, hilfreich.

Um die Flüssigkeit wiederverwerten zu können, kann an dem Träger 10 eine entsprechende Einheit oder ein entsprechendes Mittel zum Entfernen von Flüssigkeit von der Schutzvorrichtung 16 bzw. der Rohrwand / dem Werkstück vorgesehen sein (nicht gezeigt), beispielsweise in Form einer geeigneten Ein-/Absaugvorrichtung. Durch diese Maßnahme kann der Platzbedarf für das vorstehend erwähnte Flüssigkeitsreservoir verringert werden oder sogar im Wesentlichen ganz entfallen für den Fall, dass die Flüssigkeit unmittelbar zu dem Mittel zum Aufbringen von Flüssigkeit zurückgeleitet wird.

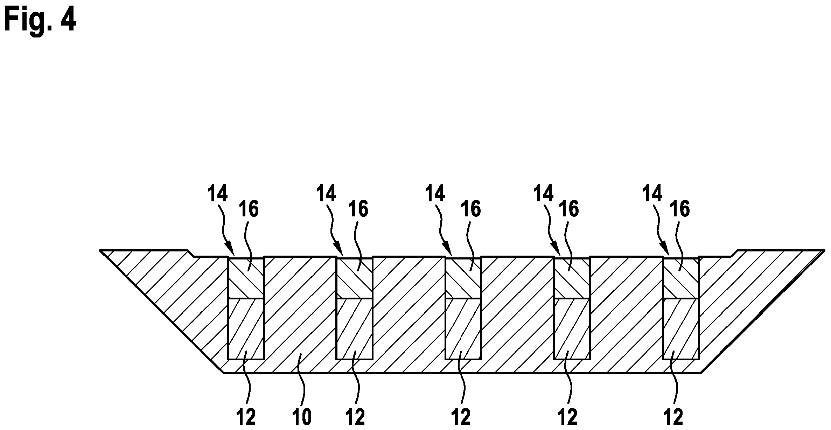

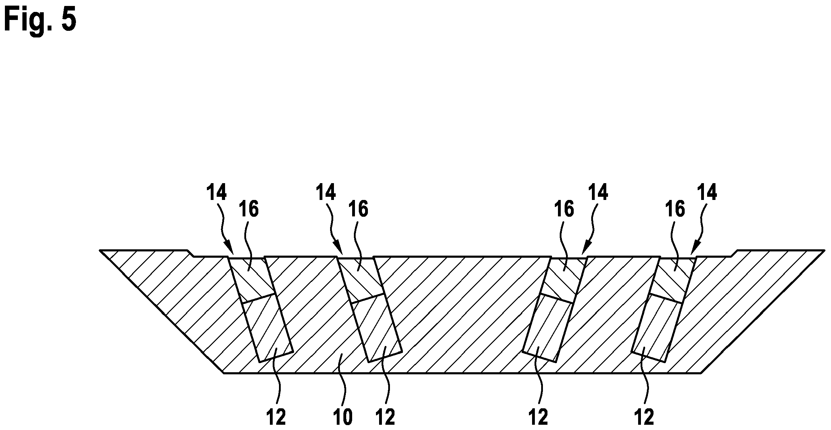

In den Figuren 4 und 5 sind weitere nicht erfindungsgemäße Ausführungsformen gezeigt. Der Träger 10 weist dabei vier Vertiefungen 14 auf, wobei in jeder der Vertiefungen 14 ein Sendeempfänger 12 eingesetzt ist. Die Schutzvorrichtung 16 umfasst in diesen Ausführungsformen einzelne Elemente, von denen jedes in eine der Vertiefungen 14 eingesetzt ist, dass es den in dieser Vertiefung 14 angeordneten Sendeempfänger 12 bedeckt und nach Außen verschließt. Die einzelnen Sendeempfänger 12 können dabei in die gleiche Richtung weisen bzw. die gleiche Abstrahlrichtung haben (Figur 4) oder verschiedene Richtungen aufweisen (Figur 5).

Die vorstehend beispielhaft beschriebenen Ausführungsformen der Vorrichtung 100 können in Systemen zur Inspektion von (metallischen) Werkstücken, beispielsweise Rohrleitungen, zum Einsatz kommen. Speziell geeignet sind die Ausführungsformen für Molche zur Rohrleitungsprüfung.

## Patentansprüche

1. Vorrichtung zur Untersuchung einer Rohrwand oder eines sonstigen Werkstücks, welche umfasst
einen Träger (10);
mindestens einen Ultraschall-Sendeempfänger (12), der auf dem Träger (10) angeordnet ist; und
eine Schutzvorrichtung (16), die dazu eingerichtet ist, den mindestens einen Ultraschall-Sendeempfänger (12) gegen Verschmutzung zu schützen,
wobei die Schutzvorrichtung (16) eine Membran umfasst und
wobei der Träger (10) eine Vertiefung (14) aufweist und der mindestens eine Ultraschall-Sendeempfänger (12) in der Vertiefung (14) angeordnet ist, wobei die Membran den gesamten Träger (10) umspannt und dabei die Vertiefung (14) in dem Träger (10) bedeckt und ein abgeschlossenes Volumen zwischen sich und einem Boden der Vertiefung (14) in dem Träger (10) bildet.

2. Vorrichtung nach Anspruch 1, wobei die Schutzvorrichtung (16) an dem Träger (10) lösbar befestigt ist.

3. Vorrichtung nach Anspruch 1, wobei die Schutzvorrichtung (16) mit dem Träger (10) fest verbunden ist.

4. Vorrichtung nach Anspruch 1, wobei die Vertiefung (14) mit einem Medium (18) gefüllt und das Medium (18) in der Vertiefung (14) eingeschlossen ist, sodass das Medium (18) bei der Verwendung von Ultraschall als Kopplungsmedium dienen kann.

5. Vorrichtung nach einem der vorhergehenden Ansprüche, wobei die Membran derart an dem Träger (10) angeordnet ist, dass sie bei einer Bewegung des Trägers (10) entlang der Rohrwand oder dem sonstigen Werkstück und einem gleichzeitigen Kontakt der Membran mit der Rohrwand oder dem sonstigen Werkstück abrollt, und der Träger (10) hierzu Auf- und Abrollvorrichtungen oder Umlenkvorrichtungen aufweist.

6. Vorrichtung nach Anspruch 5, wobei die Auf- und Abrollvorrichtungen oder Umlenkvorrichtungen aktiv abrollend oder passiv abrollend sind.

7. Vorrichtung nach einem der vorhergehenden Ansprüche, welche ferner ein Mittel zum Aufbringen von Flüssigkeit auf zumindest einem Teil der Schutzvorrichtung (16) bzw. der Rohrwand oder dem sonstigen Werkstück umfasst.

8. Vorrichtung nach Anspruch 7, welche ferner ein Mittel zum Entfernen von Flüssigkeit von der Schutzvorrichtung (16) bzw. der Rohrwand oder dem sonstigen Werkstück umfasst.

9. Molch zur Rohrleitungsprüfung, welcher mindestens ein Segment umfasst, wobei ein Segment eine Vorrichtung (100) gemäß einem der vorhergehenden Ansprüche umfasst.

10. Molch nach Anspruch 9, wobei der Molch einen Generator zur Umwandlung der kinetischen Energie eines umströmenden Mediums in Energie zum Betrieb des Molchs umfasst.

## Claims

1. Device for inspecting a pipe wall or another workpiece which comprises:
a support (10),
at least one ultrasound transceiver (12) which is arranged on the support (10), and
a protective device (16) which is configured to protect the at least one ultrasound transceiver (12) from contamination,
wherein the protective device (16) comprises a membrane and
wherein the support (10) has a recess (14) and the at least one ultrasound transceiver (12) is arranged in the recess (14), wherein the membrane spans the whole support (10) and thereby covers the recess (14) in the support (10) and forms a closed volume between itself and a base of the recess (14) in the support (10).

2. Device according to claim 1, wherein the protective device (16) is secured detachably to the support (10).

3. Device according to claim 1, wherein the protective device (16) is securely connected to the support (10).

4. Device according to claim 1, wherein the recess (14) is filled with a medium (18) and the medium (18) is enclosed in the recess (14) so that the medium (18) can be used as a coupling medium when using ultrasound.

5. Device according to any of the preceding claims, wherein the membrane is arranged on the support (10) such that during a movement of the support (10) it rolls along the pipe wall or the other workpiece and a simultaneous contact of the membrane with the pipe wall or the other workpiece, and the support (10) has winding and unwinding devices or deflection devices for this purpose.

6. Device according to claim 5, wherein the winding and unwinding devices or deflection devices are actively rolling or passively rolling.

7. Device according to any of the preceding claims, which further comprises a means for applying liquid onto at least one portion of the protective device (16) and/or the pipe wall or the other workpiece.

8. Device according to claim 7, which further comprises a means for removing liquid from the protective device (16) and/or the pipe wall or the other workpiece.

9. Pipeline inspection pig, which comprises at least one segment, wherein one segment comprises a device (100) according to any of the preceding claims.

10. Pig according to claim 9, wherein the pig comprises a generator for converting the kinetic energy of a medium flowing around into energy for operating the pig.

## Revendications

1. Dispositif pour examiner une paroi de tube ou une autre pièce, qui comprend un support (10) ;
au moins un émetteur-récepteur à ultrasons (12) qui est disposé sur le support (10) ; et
un dispositif de protection (16) qui est agencé pour protéger le au moins un émetteur-récepteur à ultrasons (12) contre l'encrassement,
selon lequel le dispositif de protection (16) comprend une membrane et
selon lequel le support (10) présente un enfoncement (14) et le au moins un émetteur-récepteur à ultrasons (12) est disposé dans l' enfoncement (14), selon lequel la membrane enserre l'entièreté du support (10) et, en outre, recouvre l'enfoncement (14) dans le support (10) et forme un volume fermé entre elle et un fond de l'enfoncement (14) dans le support (10).

2. Dispositif selon la revendication 1, selon lequel le dispositif de protection (16) est fixé au support (10) de manière amovible.

3. Dispositif selon la revendication 1, selon lequel le dispositif de protection (16) est fermement accouplé au support (10).

4. Dispositif selon la revendication 1, selon lequel l'enfoncement (14) est rempli avec un fluide (18) et le fluide (18) est renfermé dans l'enfoncement (14) de façon que le fluide (18) puisse servir de milieu de couplage lors de l'utilisation d'un ultrason.

5. Dispositif selon l'une des revendications précédentes, selon lequel la membrane est disposée sur le support (10) de telle façon qu'elle se déroule lors d'un mouvement du support (10) le long de la paroi de tube ou de l'autre pièce ou d'un contact simultané de la membrane avec la paroi de tube ou l'autre pièce, et le support (10) présente à cette fin des dispositifs d'enroulement et de déroulement ou des dispositifs de renvoi.

6. Dispositif selon la revendication 5, selon lequel les dispositifs d'enroulement et de déroulement ou les dispositifs de renvoi se déroulent de manière active ou se déroulent de manière passive.

7. Dispositif selon l'une des revendications précédentes, qui comprend en outre un moyen pour appliquer un liquide sur au moins une partie du dispositif de protection (16) ou de la paroi de tube ou sur l'autre pièce.

8. Dispositif selon la revendication 7, qui comprend en outre un moyen pour enlever un liquide du dispositif de protection (16) ou de la paroi de tube ou de l'autre pièce.

9. Écouvillon pour examiner une conduite, qui comprend au moins un segment, selon lequel un segment comprend un dispositif (100) selon l'une des revendications précédentes.

10. Écouvillon selon la revendication 9, selon lequel l'écouvillon comprend un générateur pour convertir l'énergie cinétique d'un fluide s'écoulant de manière circulaire en énergie pour le fonctionnement de l'écouvillon.
